# EUROPEAN PATENT SPECIFICATION

(11) **EP 1 534 490 B1**
(45) Date of publication and mention of the grant of the patent: **02.08.2006**
(21) Application number: 02788269.5
(22) Date of filing: 20.12.2002
(51) Int. Cl.: B29C 45/14, B29C 65/70, F16L 47/00, B29C 65/10, B29C 70/84, B29L 23/00

(54) **EQUIPMENT FOR MANUFACTURING PIPE-COUPLINGS AND PIPE COUPLINGS**
VORRICHTUNG ZUM HERSTELLEN VON ROHRVERBINDUNGEN UND ROHRVERBINDUNG
DIPOSITIF POUR PRODUIRE DES RACCORDS DE TUYAUTERIE ET RACCORDS DE TUYAUTERIE

(30) Priority: 21.08.2002 HU 0202756; 13.09.2002 HU 0200255 U
(43) Date of publication of application: 01.06.2005
(73) Proprietor: Rigo, Mihaly, 1074 Budapest (HU); Hetényi, Géza, 1137 Budapest (HU)
(72) Inventor: Rigo, Mihaly, 1074 Budapest (HU); Hetényi, Géza, 1137 Budapest (HU)
(74) Representative: Varga, Tamas Péter
(86) International application number: PCT/HU2002/000155
(87) International publication number: WO 2004/018176

(56) References cited:
- EP-A- 0 531 709
- DE-U- 9 114 651
- PATENT ABSTRACTS OF JAPAN vol. 1999, no. 04, 30 April 1999 (1999-04-30) & JP 11 022889 A (C I KASEI CO LTD), 26 January 1999 (1999-01-26)

## Description

The invention is an equipment for producing pipe-couplings and a pipe-coupling with improved sealing made this way, with the help of said improved sealing of junctions of plastic pressure pipes and plastic fitting bodies is ensured by a closing flange produced by a manual injection molding machine and where a cohesive bond is formed between the plastic pressure pipe and the plastic fitting body for ensuring closing.

Nowadays plastic pressure pipes almost entirely replaced lead and galvanized water-conduits applied earlier in plumbing. Beside using plastic pressure pipes in plumbing, another field of application is in floor-heating systems. Introduction of new materials resulted in applying new solutions and technologies in using plastic pressure pipes and plastic fittings for coupling plastic pressure pipes. It is especially important to apply water-tight, durable couplings as pressure-pipe systems respectively heating pipe systems are almost invariably located in a hidden way in walls, plaster or under a concrete layer. Therefore it is especially important to use a most reliable coupling of pipes, as in case of any defect fixing of the fault may result in expensive dismantling works.

In the state of art coupling mechanism is exemplified by Hungarian published patent application HU-A2-000 35 04. The coupling mechanism described here consists of a coupling element, at least one coupling stud formed in one piece with the coupling element, and a tightening sheath which could be joined the coupling element beforehand. Besides the coupling element is provided with a housing socket, for example a fixing groove, with a joining element for example a fixing projection located at the front side end of the tightening sheath. The joining element of the tightening sheath and the housing socket of the coupling element form a coupling of snap or bolt type.

Hungarian published patent application HU-A2-73687 makes known a fast coupler for pipes or hoses. The fast coupler described here consists of a plastic house with a socket with at least one first socket located at a given distance from the joining end of the socket and serves for joining one end of a pipe or hose. The mechanism has furthermore a second socket part, the inner diameter of this socket is larger, than that of the first socket part and said second socket part includes a bolting ring, a spacer ring and sealing ring following each other viewing from the end of the first socket part. Rings are fixed by a fastening ring placed at the joining end of the socket and are connected to the house.

A further equipment for producing pipe couplings is known from DE-U-9 114 651.

The solution applied in practice at present and the above solutions suffer from one or two limitations, which are partly due to solutions using adhesives or to aging of sealing rings on the long term resulting in leaking. Making accurate pipe-couplings depends on the accuracy of the person doing the job, as inaccurate, wrong joining results in leaking. In case of multilayer plastic-metal structure pressure pipes applied most frequently nowadays an additional problem results from the fact, that the layers of these pipes are not closed at the end at the cutting edge. This way in case of puncture of intermediate layers water can penetrate between the metal and plastic layers through the cutting edge at the end of the pipe. In extraordinary case, in case of bigger pressure it may result in that, the water goes through the plastic layer resulting in leaking or flowing there, which may also cause severe damages.

Working out the solution according to the invention we aimed to elaborate an equipment suitable for making pipe-couplings as well as pipe-couplings made using this equipment, making possible a closing between a plastic pressure-pipe and plastic fitting body ensuring perfect water-tightness between the plastic pressure pipe and the plastic fitting body on the long term and in case of pipes of layer-structure closing of the cutting edge of the plastic pressure pipe is also ensured.

When working out the solution we also realized, that in case after joining the plastic pipes and plastic fittings the junction formed this way is closed round by a plastic closing flange produced in-site by injection molding, then the set aim can be achieved.

The invention is an equipment for producing a pipe-coupling with improved sealing providing leak-proof closing of a pipe joining a fitting according to claim 1.

Furthermore the invention is a pipe-coupling with improved sealing for joining a plastic pipe and a plastic fitting body according to claim 2.

Preferred embodiments are set out in claims 3 and 4. The solution according to the invention is set forth with the enclosed figures:
Fig 1 shows a preferred embodiment of the pipe-coupling according to the invention in section.
Fig 2 shows a preferred embodiment of the pipe-coupling according to the invention in cross-section.
Fig 3 shows a preferred embodiment of the pipe-coupling and the equipment according to the invention in section.

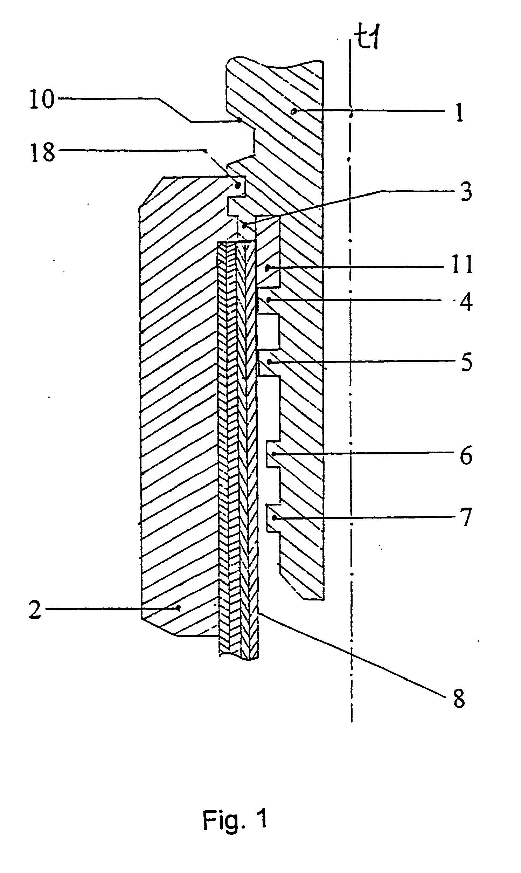

Fig 1 shows a preferred embodiment of the pipe-coupling according to the invention in section. In case of a plastic pipe 8 and plastic fitting body 1 the multilayer plastic pipe 8 and the plastic fitting body 1 can be seen in the figure, as well as the closing flange 4, safety closing flange 5, guiding rings 6,7 ensuring coupling of the plastic pipe 8 with the plastic fitting body 1, furthermore the injection molded sealing ring 2. The spacer stops 3 formed on the fitting body 1 provide space for the feeding of the plastic raw material 16 to the fitting body 1, plastic pipe 8, as well as between the closing flange 4 for the closing of the cutting edge of the plastic pipe 8. This way during in-site injection molding sealing ring 11 is formed, which ensures together with the sealing ring 2 and the safety ring 18 perfect water-tightness of both the fitting body 1 and the plastic pipe 8 as well as that of the multilayer plastic pipe 8. Fig 1 shows furthermore the conical mold-guiding groove 10 formed on the fitting body 1, which serves for positioning the injection mold at producing the pipe-coupling.

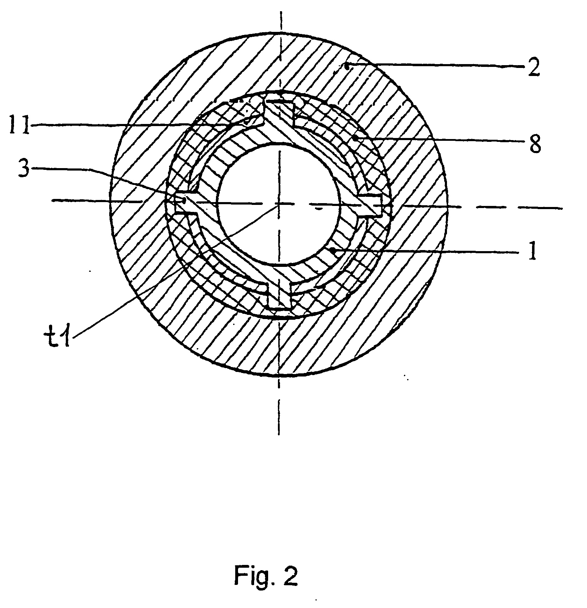

Fig 2 shows a preferred embodiment of the pipe-coupling according to the invention in cross-section in case of a plastic pipe 8 and a plastic fitting body 1. The injection molded sealing ring 2 ensuring water-tightness of the plastic fitting body 1 and the plastic pipe 8 can be seen in the figure as well. The sealing ring 11 part of the injection molded sealing ring 2 ensures water-tightness of the cutting edge of the multilayer plastic pipe 8. The spacer stops 3 formed on the fitting body 1 preventing the fitting body 1 to rest completely in the inside of the end of the plastic pipe 8 can be seen well in figure 2, so the plastic raw material 16 fed into this space forms a sealing ring 11 ensuring proper sealing of the end and layers of the plastic pipe 8 as well.

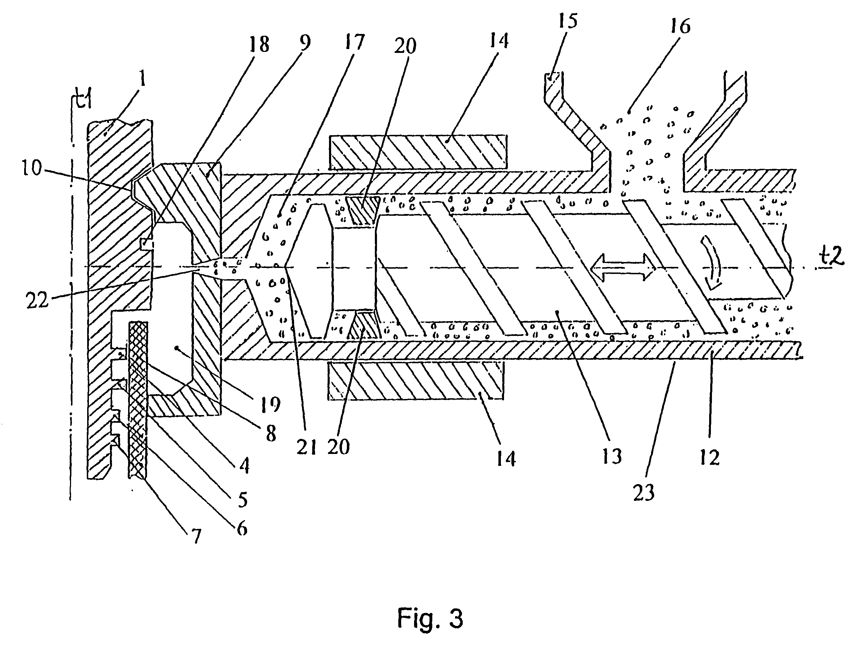

Fig 3 shows a preferred embodiment of the pipe-coupling and the equipment according to the invention in section. The manual injection molding machine 23 suitable for making the pipe-coupling in-site can be seen in figure 3 as well. The injection mold 9 part of the injection molding machine 23 serving for producing the injection molded sealing ring 2 joins the coupling of the fitting body 1 and the plastic pipe 8. The conical mold-guiding groove 10 formed on the fitting body 1 ensures accurate positioning of the injection mold 9 of the injection molding machine 23. The safety ring 18 is filled with the plastic raw material 16 fed into the mold cavity 19 of the injection molding machine 23 ensuring even more precise water-tightness and the working together of the fitting body 1 and the sealing ring 2. It can be seen in figure 3 that the coupling and positioning of the fitting body 1 and that of the multilayer plastic pipe 8 are ensured by the closing flange 4 formed on the fitting body 1, as well as the safety closing flange 5 and the guiding rings 6,7. In-site injection molding takes place after the coupling with the manual injection molding machine 23 resulting in forming of the injection molded sealing ring 2 of the pipe-coupling.

The screw 13 is located in the cylinder 12 of the injection molding machine 23, which feeds the plastic raw material 16 stored in the container 15 to the compression space 17 between the heaters 14 by its rotating movements. The plastic raw material 16, which is preferably of solid state granule going past between the heaters 14 melts into a fluid state, so from the compression space 17 with the help of the screw end 21 of the specially formed screw 13 it is passed to the mold cavity 19 under proper overpressure through the flow-opening 22. The plastic raw material 16 pressed into the mold cavity 19 of the injection mold 9 fills up on the one hand the mold cavity 19, the safety ring 18 and flows as well between the closing flange 4 of the plastic pipe 8 and the fitting body 1. This way the sealing ring 11 is formed ensuring the closing of the cutting edge of the multilayer plastic pipe 8. During injection molding the non-return ring 20 placed in the cylinder 12 prevents the plastic raw material 16 of fluid state in the compression space 17 from flowing back beside the screw 13.

In case of a possible embodiment of the solution according to the invention after coupling of the plastic pipe 8 and the plastic fitting body 1 the injection mold 9 of the injection molding machine 23 is positioned with the help of the conical mold-guiding groove 10 of the fitting body 1, then the screw 13 with the rotating movements of its grooves passes the solid plastic raw material granules 16 in front of the screw 13 to the compression space 17 while the raw material 16 passing beside the heater 14 becomes fluid. When the screw 13 gets to its end position the passing of a suitable quantity of the plastic raw material 16 into the compression space 17, the rotating movement is terminated and the screw 13 presses the melted plastic through the feed end 22 with the help of the screw end 21 during overpressure.

After the screw 13 had reached its first end position, the overpressure is released and the plastic raw material 16 in the mold cavity 19 is cooled after a proper period of time. The injection mold 9 in given case can be provided with a cooling system, but it is feasible without it as well. After the injection molded sealing ring 2 set, the injection mold 9 can be removed and can be positioned to the next coupling spot and the process can be restarted. Raw material of the sealing ring 2 can be any plastic material suitable for injection molding. The definite raw material should be specified taking into consideration of the raw materials of the plastic pipe 8 and that of the fitting body 1 in order to ensure the appropriate surface cohesion between the elements during the injection molding.

The advantage of the solution according to the invention is, that plastic fitting bodies coupling multilayer plastic pipes in use can be produced in an easier and cheaper way and a safer coupling can be ensured than in case of those applied according to the methods in the state of art. An additional advantage of the solution according to the invention is, that it makes use of the property of the plastics, that in case of suitable temperature and pressure ready-made plastic elements can establish cohesional connection with injection molded fluid plastic of high temperature, increasing further the efficiency of water-tightness. Further advantage of the solution according to the invention is, that forming of a water-tight coupling between the fitting body and the plastic pipe takes place during an automatic process, so the accuracy of the coupling bonds and the water-tightness do not depend on the attention of the worker performing the job, as everything is adjusted automatically by a manual injection molding machine.

## Claims

1. Equipment for producing a pipe-coupling with improved sealing providing leak-proof closing of a pipe joining a fitting, when a fitting is housed in an end of a pipe and a unit compiled this way is provided with a leak-proof closing,
in which equipment a cylinder (12) of a manual injection molding machine (23) a screw (13) making rotating and thrusting movements is located and there is a compression space (17) in a cylinder (12) at the end (21) of the screw (13) joining a flow opening (22), furthermore a heater (14) is located around the cylinder (12), and a container (15) for storing and dosing plastic granule raw materials is joined the cylinder (12), wherein
the equipment is a manual injection molding machine (23) that has an injection mold (9) suitable for producing an injection molded sealing ring (2) closing round a junction and in said injection mold (9) a mold cavity (19) is formed joining a connection of a pipe (8) and a fitting body (1), and a flow opening (22) of a manual injection molding machine (23) is joined this mold cavity (19),
***characterized by that*** the injection mold (9) forms part of the injection molding machine (23) serving for producing the injection molded sealing ring (2) joins the coupling of the fitting body (1) and the plastic pipe (8) with a conical mold-guiding groove (10) formed on the fitting body (1) ensures accurate positioning of the injection mold (9) of the injection molding machine (23).

2. A pipe-coupling with improved sealing for joining a plastic pipe and a plastic fitting body, and said plastic fitting body is of cylinder symmetrical form, and said plastic fitting body has a part joining the plastic pipe, wherein
on the outer surface of the said fitting body (1) there is a closing flange (4) of ring shape and said fitting body (1) has spacer stops (3) resting at the end of a pipe (8) and said fitting body (1) has a sealing ring (11) formed at the joining of the pipe (8) and the fitting body (1) by in-site injection molding and said fitting body (1) preferably has an injection molded sealing ring (2) preferably closing round the joining,
***characterized by that,*** on the outer surface of the fitting body (1) there is an additional safety closing flange (5), and guiding rings (6,7), and a conical mold-guiding groove (10),
and a safety ring (18) is formed on the outer surface of the fitting body (1) formed by in-site injection molding.

3. A pipe-coupling according to claim 2, **characterized by** that, a pipe (8) is a plastic or metal pipe with homogeneous or laminated structure, in given case copper or galvanized steel, in given case a multilayer pipe consisting of metal-plastic layers.

4. A pipe-coupling according to claim 2 or 3, **characterized by** that, the material of the fitting body (1) is plastic or metal pre-fabricated by injection molding or casting in given case a plastic or metal fitting body in given case copper or galvanized steel.

## Patentansprüche

1. Vorrichtung für herstellen einen Rohranschluss mit verbesserter Dichtung, die einen undurchlässigen Verschluss des Rohranschlusses mit einer Befestigung vorgesehen wird, wo eine Befestigung in einem Ende eines Rohres untergebracht wird und eine Einheit auf diese Weise mit einem undurchlässigen Verschluss zusammengestellt wird,
in welcher Vorrichtung gibt es ein Zylinder (12) der manuellen Spritzgussmaschine (23), eine Schraube (13) mit drehenden und schiebenden Bewegungen und in dem Zylinder (12) gibt es einen Kompressionraum (17) am Ende (21) der Schraube (13), die mit einer Flussöffnung (22) verbindet ist, außerdem befindet sich eine Heizung (14) um den Zylinder (12), und ein Behälter (15) für die Speicherung und Dosierung des granulierten Rohstoffe aus Kunststoff, verbunden mit dem Zylinder (12), wobei
die Vorrichtung ist eine manuelle Spritzgussmaschine (23), die einen Spritzenform (9) hat, die für die Herstellung eines den Verschluss einschließende spritzgeformten Dichtungsringes (2) verwendbar ist, und in besagtem Spritzenform (9) wird ein Formraum (19) gebildet, verband zu einem Anschluss des Rohres (8) und des Formstückes (1), und eine Flussöffnung (22) der manuellen Spritzgussmaschine (23) wird dieser Formraum (19) verbunden, und der Spritzenform (9) beteiligt der Spritzgussmaschine (23), die für die Herstellung des spritzgeformten Dichtungsringes (2) dient, verbindet den Verschluss des Formstückes (1) und das Plastikrohr (8) mit einer konischenförmige Führungsfuge (10), die auf der äußeren Fläche des Formstückes (1) gebildet wird, sichert die genaue Einstellung des Spritzenforms (9) der Spritzgussmaschine (23).

2. Ein Rohranschluss mit verbesserter Dichtung für verbinden Kunststoffrohren und Formstückes aus Kunststoff, und besagtes Formstückes aus Kunststoff nimmt symmetrischenzylindrischen Form, und besagt Formstück aus Kunststoff hat ein Teil mit dem Kunststoffrohr verbunden, wobei
auf der Außenseite des besagten Formstückes (1) ist ein ringförmiger schließender Flansch (4), und besagtes Formstück (1) hat Distanzscheibenanschläge (3), die sich am Ende eines Rohres (8) gesetzt sind und besagtes Formstück (1) hat einen Dichtungsring (11), gebildet am Verbinden des Rohres (8) und das Formstück (1) am Ort spritzgegossen und das besagte Formstück (1) hat vorzugsweise ein spritzgeformten Dichtungsring (2) vorzugsweise schliesst ringsum das Verbinden, und auf der Außenseite des Formstück (1) ist ein zusätzliche schließender Flansch für Sicherung (5) und eine leitende Ringe (6,7) und eine konischenförmige Führungsfuge (10), und ein Sicherheitsring (18) wird auf der Außenseite des Formstückes (1) gebildet, die am Ort durch Spritzgießen gebildet werden.

3. Ein Rohranschluss entsprechend dem Anspruch 2, **dadurch gekennzeichnet dass** ein Rohr (8) ist ein Kunststoff oder Metallrohr mit homogener oder laminierter Struktur, in gegebenem Fall aus Kupfer oder aus galvanisiertem Stahl, in gegebenem Fall ein mehrschichtiges Rohr, besteht aus Metall-Kunststoffschichten.

4. Ein Rohranschluss entsprechend Anspruch 2 oder 3, **dadurch gekennzeichnet dass** die Material des Formstückes (1) ist Kunststoff oder Metall, die durch Spritzguss oder Abgießen, in gegebenem Fall durch einen Kunststoff- oder ein Metall Formstück, oder in gegebenem Fall aus Kupfer oder aus galvanisiertem Stahl vorfabriziert ist.

## Revendications

1. Équipement pour produire un raccord de tuyauterie avec joint amélioré, servant à la fermeture étanche d'un tuyau joignant à un ajustement, quand un ajustement est installé à l'embout d'un tuyau et une unité composée de cette façon est munie de fermeture étanche,
dans cet équipement il y a un cylindre (12) dans la machine de moulage par injection manuelle (23) et il y a dedans une vis (13) faisant des mouvements tournants et poussants et il y a un espace de compression (17) dans le cylindre (12) au bout (21) de la vis (13) joignant à une ouverture d'écoulement (22), en outre un réchauffeur (14) est situé autour du cylindre (12), et un réservoir (15) pour déposer et doser le granule en plastique des matières de base est joint le cylindre (12), où
l'équipement est une machine de moulage par injection manuelle (23), qui ont un moule d'injection (9) approprié à produire une rondelle de joint moulée par injection (2) autour d'une jonction et dans ledit moule d'injection (9), une cavité de moule (19) est formée joignant à un raccordement d'un tuyau (8) et un corps d'ajustement (1), et une ouverture d'écoulement (22) de la machine de moulage par injection manuelle (23) est jointe à cette cavité de moule (19), et le moule d'injection (9) faisant partie de la machine de moulage d'injection (23) servant à produire la rondelle de joint moulée par injection (2) joint à la conjonction du corps d'ajustement (1) et la tuyau en plastique (8) avec une rainure conique pour guider le moulage (10) formée sur le corps d'ajustement (1) assure le positionnement précis du moule d'injection (9) de la machine de moulage d'injection (23).

2. Un raccord de tuyauterie avec joint amélioré pour joindre un tuyau en plastique et un corps d'ajustement en plastique, et ledit corps d'ajustement en plastique tiens une forme symétrique du cylindre, et ledit corps d'ajustement en plastique est pourvu d'une pièce joignant au tuyau en plastique, où
sur la surface externe dudit corps d'ajustement (1) il y a une bordure de fermeture (4) de forme d'anneau et ledit corps d'ajustement (1) a des butées d'espacement (3), qui se sont reposé à l'extrémité d'un tuyau (8) et ledit corps d'ajustement (1) a une rondelle de joint (11) situé à la conjonction du tuyau (8) et du corps d'ajustement (1) créés par moulage d'injection sur place et ledit corps d'ajustement (1) a préférablement une rondelle de joint moulée par injection (2) de préférence autour de la conjonction, et sur la surface externe du corps d'ajustement (1) il y a une additionnelle bordure de fermeture de fixation (5), et des anneaux de guidage (6,7), et une cannelure conique pour guider le moulage (10), et un anneau de fixation (18) est formé sur la surface externe du corps d'ajustement (1) constitué par le moulage d'injection sur place.

3. Un raccord de tuyauterie selon la revendication 2, **caractérisée en ce que** le tuyau (8) est un tuyau en plastique ou en métal avec la structure homogène ou stratifiée, dans le cas donné en cuivre ou en acier galvanisé, dans le cas donné un tuyau multicouche des couches des composantes métalloplastiques.

4. Un raccord de tuyauterie selon la revendication 2 ou 3, **caractérisé en ce que** le matériel du corps d'ajustement (1) est en plastique ou en métal préfabriqué par moulage d'injection ou par moulage, dans le cas donné un plastique ou un métal corps d'ajustement ou dans le cas donné en cuivre ou an acier galvanisé.
